# EUROPEAN PATENT APPLICATION

(11) **EP 4 545 161 A1**
(43) Date of publication of application: **30.04.2025**
(21) Application number: 23831271.4
(22) Date of filing: 22.06.2023
(51) Int. Cl.: B01D 19/00, B01D 61/00, B01D 63/06, F04B 23/00

(54) **DEGASSING DEVICE**

(30) Priority: 27.06.2022 JP 2022102627
(71) Applicant: DIC Corporation, Tokyo 174-8520 (JP)
(72) Inventor: SUGANUMA Youhei, Ichihara-shi, Chiba 290-8585 (JP); KAWASHIMA Kazuyasu, Ichihara-shi, Chiba 290-8585 (JP); SATO Akira, Ichihara-shi, Chiba 290-8585 (JP); FUSE Takaaki, Ichihara-shi, Chiba 290-8585 (JP)
(74) Representative: TBK
(86) International application number: PCT/JP2023/023202
(87) International publication number: WO 2024/004827

(57) **Abstract**

A deaerator includes: a deaerating module having a tube unit that has gas permeability and partitions between a fluid flowing space and a depressurized space; a vacuum piping that is connected to the deaerating module to communicate with the depressurized space in the deaerating module; and a discharge device connected to the vacuum piping and configured to discharge a gas in the depressurized space to outside via the vacuum piping, in which the vacuum piping has: a suction pipe portion that communicates with the depressurized space and extends from the deaerating module to the discharge device, and a buffer pipe portion that is branched off from the suction pipe portion and is closed at an end portion thereof.

## Description

### Technical Field

The present invention relates to a deaerator.

### Background Art

In PTL 1, a deaerator that is used in a liquid chromatography device, among others, is disclosed.

### Citation List

### Patent Literature

PTL 1: WO 2007-094242

### Summary of Invention

### Technical Problem

In the deaerator described in PTL 1, a depressurized space in a deaerating module having a tube unit installed therein communicates with a discharge device (pump) by a vacuum piping, in which a liquid that flows through the tube unit is deaerated by driving the discharge device. However, when the discharge device is driven, pulsation of a suction pressure occurs in the vacuum piping and in the depressurized space. In the deaerating module, the pulsation like this causes the tube unit to expand and contract repeatedly, which increases and decreases the volume of the tube unit, resulting in turbulence in the flow rate and amount of the liquid that flows through the tube unit. As a result, a measurement result and so on may be affected.

Therefore, one aspect of the present invention is to provide a deaerator in which the pulsation of the suction pressure that is generated in the depressurized space may be reduced thereby achieving suppression of the turbulence in the flow rate and amount of the liquid that flows through the tube unit.

### Solution to Problem

[1] A deaerator according to one aspect of the present invention includes: a deaerating module having a tube unit that has gas permeability and partitions between a fluid flowing space and a depressurized space; a vacuum piping that is connected to the deaerating module to communicate with the depressurized space in the deaerating module; and a discharge device connected to the vacuum piping and configured to discharge a gas in the depressurized space to outside via the vacuum piping, in which the vacuum piping has: a suction pipe portion that communicates with the depressurized space and extends from the deaerating module to the discharge device, and a buffer pipe portion that is branched off from the suction pipe portion and is closed at an end portion thereof.
   In this deaerator, because the depressurized space in the vacuum module communicates with the discharge device via the suction pipe portion of the vacuum piping, the pulsation of the suction pressure occurs in the suction pipe portion and in the depressurized space with the action of the discharge device. However, because the vacuum piping has, in addition to the suction pipe portion that communicates from the depressurizing space to the discharge device, a buffer pipe portion that is branched off from the suction pipe portion and is closed at the end portion thereof is formed, the pulsation of the suction pressure spreads to the buffer pipe portion, thereby allowing to reduce the pulsation of suction pressure that occurs in the suction pipe portion and in the depressurized space. With this, the turbulence in the flow rate and amount of the liquid flowing through the tube unit of the deaerating module may be suppressed. Moreover, because the buffer pipe portion is branched off from the suction pipe portion, the buffer pipe portion may be formed without increasing the length of the suction pipe portion. This allows to suppress the increase in the pressure loss of the gas from the depressurized space to the discharge device, thereby suppressing the decrease in the discharge efficiency of the discharge device. In addition, the suction pipe portion may be readily handled.
[2] In the deaerator as described in [1], a buffer branch portion at which the buffer pipe portion is branched off from the suction pipe portion may be located in downstream of the deaerating module in a flow direction of the gas from the deaerating module to the discharge device. In this deaerator, the buffer branch portion is located in downstream of the deaerating module in the flow direction of the gas from the deaerating module to the discharge device, so that the pulsation of the suction pressure generated in the suction pipe portion may be suppressed by the buffer pipe portion before it spreads to the depressurized space. This further reduces the pulsation of the suction pressure generated in the depressurized space.
[3] The deaerator as described in [1] or [2] may further include a detector configured to detect a degree of depressurization in the depressurized space; and the vacuum piping may further have a detection piping portion that is branched off from the suction pipe portion and connected to the detector. In this deaerator, the detector configured to detect the degree of depressurization in the depressurized space is connected to the detection piping portion that is branched off from the suction pipe portion, so that the degree of depressurization in the depressurized space may be properly detected. In addition, the detection piping portion is arranged separately from the buffer pipe portion, so that the location, shape, and the like of the buffer pipe portion may be designed without restrictions due to the detector.
[4] In the deaerator as described in [3], a detection branch portion at which the detection piping portion is branched off from the suction pipe portion may be located in upstream of a buffer branch portion at which the buffer pipe portion is branched off from the suction pipe portion in a flow direction of the gas from the deaerating module to the discharge device. In this deaerator, the detection branch portion is located in upstream of the buffer branch portion in the flow direction of the gas from the deaerating module to the discharge device, so that the pulsation of the suction pressure generated in the suction pipe portion may be reduced by the buffer pipe portion before it spreads to the detection piping portion. This improves the detection accuracy of the detector.
[5] In the deaerator as described in any one of [1] to [4], an inner diameter of the buffer pipe portion may be the same as an inner diameter of the suction pipe portion. In this deaerator, the inner diameter of the buffer pipe portion is the same as the inner diameter of the suction pipe portion, so that the vacuum piping may be manufactured conveniently.
[6] In the deaerator as described in any one of [1] to [5], a length of the buffer pipe portion may be 5% or more and 30% or less of a length of a path from the deaerating module to the discharge device in the suction pipe portion. In this deaerator, the length of the buffer pipe portion is 5% or more and 30% or less of the length of the path from the deaerating module to the discharge device in the suction pipe portion, so that the buffer pipe portion may be readily handled, and the pulsation of the suction pressure generated in the suction pipe portion may be properly reduced.
[7] In the deaerator as described in any one of [1] to [6], the length of the buffer pipe portion may be 1000% or more and 1600% or less of an inner diameter of the buffer pipe portion. In this deaerator, the length of the buffer pipe portion is 1000% or more and 1600% or less of the inner diameter of the buffer pipe portion, so that the buffer pipe portion may be readily handled, and the pulsation of the suction pressure generated in the suction pipe portion may be properly reduced.
[8] The deaerator as described in any one of [1] to [7] may further include a stopper that is removably attached to the end portion of the buffer pipe portion to close the end portion of the buffer pipe portion. This deaerator is equipped with the stopper that closes the end portion of the buffer pipe portion, so that the end portion of the buffer pipe portion may be readily closed. Assuming the case that the suction pipe portion is incorrectly connected to the discharge port side of the discharge device during maintenance or the like, and when the discharge device is activated in this state, the suction pipe portion and the depressurized space are pressurized to a high pressure. When the suction pipe portion and the depressurized space are pressurized to a high pressure, among other things, the detector that detects the degree of depressurization in the depressurized space and the suction pipe portion may be damaged or the suction pipe portion may be disconnected from the deaerating module. However, because the stopper is removably attached to the end portion of the buffer pipe portion, when the suction pipe portion and depressurized space are pressurized to a high pressure, the stopper is disconnected from the end portion of the buffer pipe portion, making the suction pipe portion and the depressurized space to be open to an atmosphere. Thus, the stopper acts as a safety valve to prevent the damage to, among other things, the detector and the suction pipe portion, and also to prevent the suction pipe portion from being disconnected from the deaerating module.
[9] In the deaerator as described in [8], the stopper may have an insertion portion that is press-fit into the buffer pipe portion. In this deaerator, the stopper has the insertion portion that is press-fit into the buffer pipe portion, so that the end portion of the buffer pipe portion may be properly closed.
[10] In the deaerator as described in [9], the deaerating module has a discharge nozzle portion that is press-fit into the suction pipe portion, in which an adhesion force between the insertion portion and the buffer pipe portion may be less than an adhesion force between the discharge nozzle portion and the suction pipe portion. In this deaerator, the adhesion force between the insertion portion and the buffer pipe portion is less than the adhesion force between the discharge nozzle portion and the suction pipe portion, so that it makes easier for the insertion portion to be disconnected from the buffer pipe portion before the discharge nozzle portion is disconnected from the suction pipe portion when the suction pipe portion and the depressurized space are pressurized to a high pressure. This further improves the function of the stopper as a safety valve.
[11] In the deaerator as described in [9] or [10], the deaerating module has a discharge nozzle portion that is press-fit into the suction pipe portion, in which an outer circumference length of the insertion portion may be smaller than an outer circumference length of the discharge nozzle portion. In this deaerator, the outer circumference length of the insertion portion is smaller than the outer circumference length of the discharge nozzle portion, so that the adhesion force between the insertion portion and the buffer pipe portion may be made smaller than the adhesion force between the discharge nozzle portion and the suction pipe portion. This makes it easier for the insertion portion to be disconnected from the buffer pipe portion before the discharge nozzle portion is disconnected from the suction pipe portion when the suction pipe portion and the depressurized space are pressurized to a high pressure.
[12] In the deaerator as described in any one of [9] to [11], the deaerating module has a cylindrical discharge nozzle portion that is press-fit into the suction pipe portion, and the insertion portion is formed cylindrically, in which an outer diameter of the insertion portion may be smaller than an outer diameter of the discharge nozzle portion. In this deaerator, the outer diameter of the insertion portion is smaller than the outer diameter of the discharge nozzle portion, so that the adhesion force between the insertion portion and the buffer pipe portion may be made smaller than the adhesion force between the discharge nozzle portion and the suction pipe portion. This makes it easier for the insertion portion to be disconnected from the buffer pipe portion before the discharge nozzle portion is disconnected from the suction pipe portion when the suction pipe portion and the depressurized space are pressurized to a high pressure.
[13] In the deaerator as described in any one of [9] to [12], the deaerating module has a discharge nozzle portion that is press-fit into the suction pipe portion, in which a length of the insertion portion may be shorter than a length of the discharge nozzle portion. In this deaerator, the length of the insertion portion is shorter than the length of the discharge nozzle portion, so that when whole of the insertion portion and whole of the discharge nozzle portion are press-fit into the buffer pipe portion and the suction pipe portion, respectively, the adhesion force between the insertion portion and the buffer pipe portion may be made smaller than the adhesion force between the discharge nozzle portion and the suction pipe portion. This makes it easier for the insertion portion to be disconnected from the buffer pipe portion before the discharge nozzle portion is disconnected from the suction pipe portion when the suction pipe portion and the depressurized space are pressurized to a high pressure.
[14] In the deaerator as described in any one of [9] to [13], the deaerating module has a discharge nozzle portion that is press-fit into the suction pipe portion, in which a press-fit length of the insertion portion to the buffer pipe portion may be shorter than a press-fit length of the discharge nozzle portion to the suction pipe portion. In this deaerator, the press-fit length of the insertion portion to the buffer pipe portion is shorter than the press-fit length of the discharge nozzle portion to the suction pipe portion, so that the adhesion force between the insertion portion and the buffer pipe portion may be made less than the adhesion force between the discharge nozzle portion and the suction pipe portion. This makes it easier for the insertion portion to be disconnected from the buffer pipe portion before the discharge nozzle portion is disconnected from the suction pipe portion when the suction pipe portion and the depressurized space are pressurized to a high pressure.
[15] In the deaerator as described in any one of [1] to [14], at least part of the vacuum piping may be a resin composition containing a polyolefin and a styrene thermoplastic elastomer. In this deaerator, at least part of the vacuum piping is formed of a resin composition containing a polyolefin and a styrene thermoplastic elastomer, so that the vacuum piping may be afforded with excellent solvent resistance, chemical resistance, and durability. In addition, gas permeability may be lowered and the disconnection of the vacuum piping may be suppressed. Moreover, the elasticity of the resin composition that contains the polyolefin and the styrene thermoplastic elastomer allows the suction pipe portion to expand and contract in response to the pulsation of the suction pressure in the suction pipe portion. This may further reduce the pulsation of the suction pressure generated in the suction pipe portion and in the depressurized space.

### Advantageous Effects of Invention

According to one aspect of the present invention, the pulsation of the suction pressure generated in the depressurized space of the deaerating module may be reduced thereby suppressing the turbulence in the flow rate and amount of the liquid flowing through the tube unit.

### Brief Description of Drawings

FIG. 1 is a schematic plan view of a deaerator according to one embodiment of the present invention.
FIG. 2 is a schematic side view of the deaerator illustrated in FIG. 1.
FIG. 3 is a schematic cross-sectional view of one example of a deaerating module installed in the deaerator illustrated in FIG. 1.
FIG. 4 is an enlarged cross-sectional view of a portion around a connector portion of the deaerating module illustrated in FIG. 3.
FIG. 5 is an enlarged cross-sectional view of a portion around the connection portion of a buffer pipe portion to a stopper in the deaerating module illustrated in FIG. 1.
FIG. 6 is an enlarged cross-sectional view of a portion around the connection portion of the deaerating module to a suction pipe portion illustrated in FIG. 1.
FIG. 7 is a schematic cross-sectional view illustrating the deaerating module, a vacuum piping, and a discharge device in the deaerator illustrated in FIG. 1.
FIG. 8 is an enlarged cross-sectional view of a portion around a vibration-absorbing member of the deaerator illustrated in FIG. 1.
FIG. 9 is a schematic side view of a deaerator of another example.
FIG. 10 is an enlarged cross-sectional view of a portion around a vibration-absorbing member of the deaerator illustrated in FIG. 9.
FIG. 11 is a schematic side view of a deaerator of another example.

### Description of Embodiments

Hereinafter, a deaerator of an embodiment will be described in detail with reference to the drawings. In all of the drawings, the same or corresponding parts are denoted by the same reference signs and an overlapping description will be omitted.

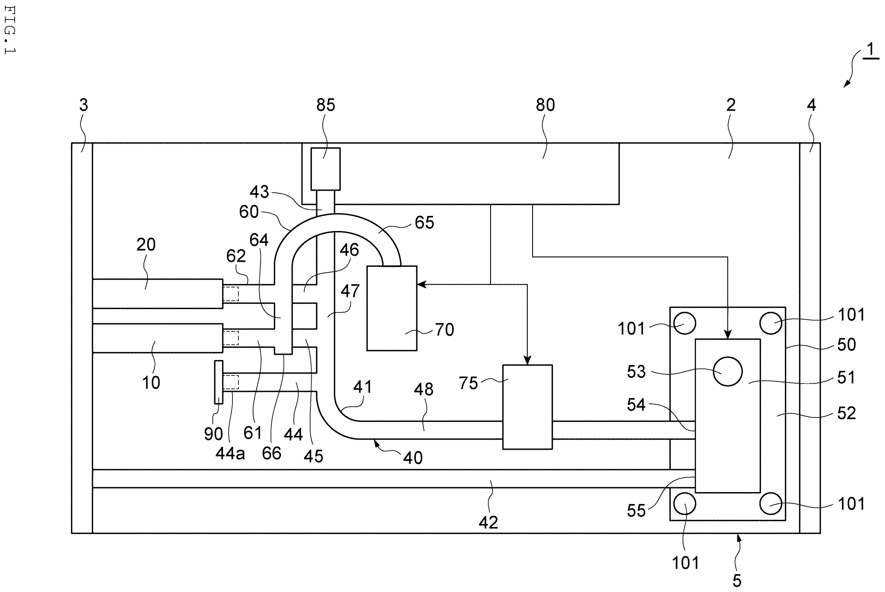

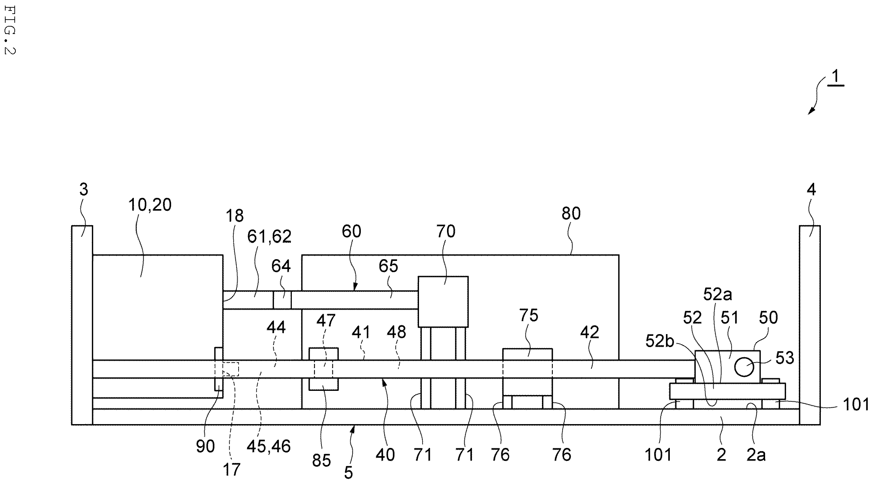

FIG. 1 is a schematic plan view of a deaerator according to one embodiment. FIG. 2 is a schematic side view of the deaerator illustrated in FIG. 1. As illustrated in FIG. 1 and FIG. 2, a deaerator 1 includes a housing 5 having a bottom plate 2, a front plate 3, and a rear plate 4, deaerating modules 10 and 20, a vacuum piping 40, a discharge device 50, an atmospheric release piping 60, an atmospheric release valve 70, a regulating valve 75, and a control unit 80. The bottom plate 2 of the housing 5 defines the bottom part of the deaerator 1, the front plate 3 of the housing 5 defines the front part of the deaerator 1, and the rear plate 4 of the housing 5 defines the rear part of the deaerator 1. The deaerator 1 is, for example, a deaerator for a liquid chromatography and performs a deaerating process on a fluid to be tested in a liquid chromatography. The deaerator 1 may also be used, as a matter of course, for a gas chromatography, a biochemical analyzer, an inkjet filling device, among others.

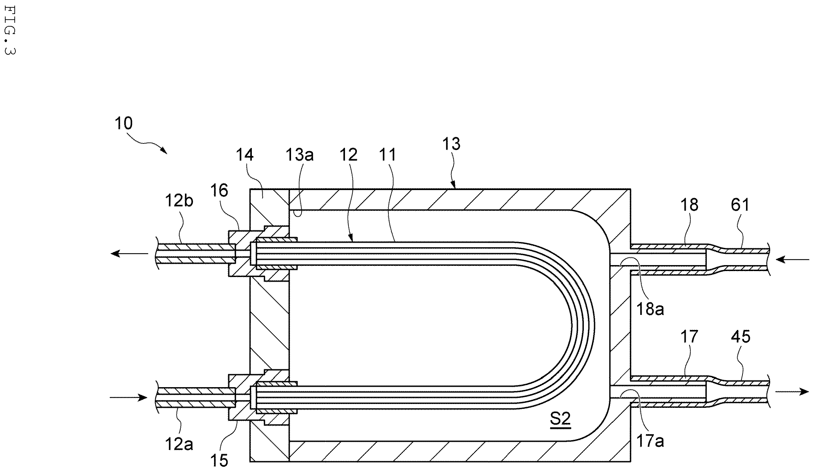

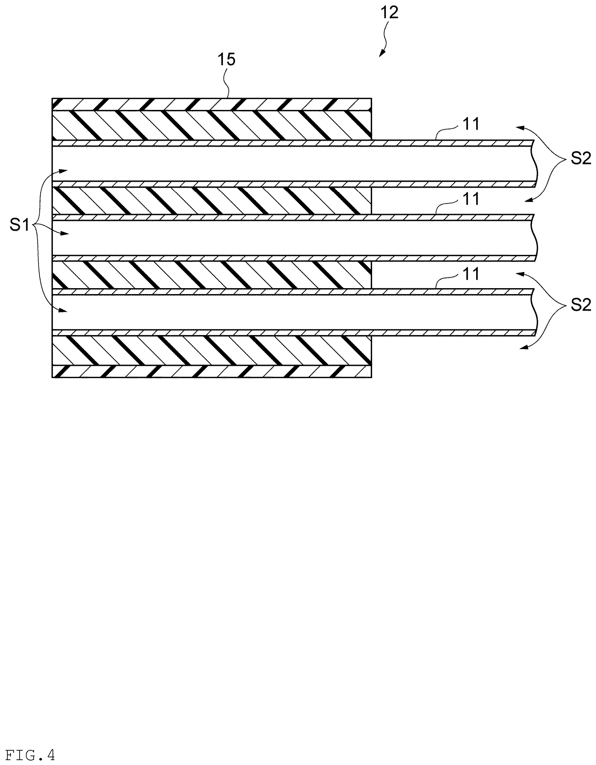

The deaerating modules 10 and 20 have a configuration, for example, as illustrated in FIG. 3. FIG. 3 is a schematic cross-sectional view of one example of the deaerating module installed in the deaerator illustrated in FIG. 1. FIG. 4 is an enlarged cross-sectional view of a portion around a connector portion of the deaerating module illustrated in FIG. 3. FIG. 3 illustrates a configuration of the deaerating module 10 as one example, and the other deaerating module 20 has the same configuration. As illustrated in FIG. 3 and FIG. 4, the deaerating module 10 has a tube unit 12 with a plurality of tubes 11 bundled at both ends, in which each tube defines a fluid flowing space S1 in the inside, a housing 13 that accommodates the tube unit 12, a lid 14 that hermetically seals an opening 13a of the housing 13, connector portions 15 and 16 that connect and fix the tube unit 12 penetrating through the lid 14, a discharge nozzle portion 17 that stands out from the housing 13, and a release nozzle portion 18. The discharge nozzle portion 17 has a discharge port 17a that communicates with the depressurized space S2, and the release nozzle portion 18 has a release port 18a that communicates with the depressurized space S2.

In the deaerating module 10, the tube unit 12, which is a gas permeable membrane, partitions the inside of the housing 13 into the fluid flowing space S1 that is an interior space of each of the tubes 11 of the tube unit 12 and the depressurized space S2 that is a space outside the tube unit 12. The fluid flowing space S1 is a region where a liquid is supplied, and the liquid that is introduced from an inlet port 12a of the tube unit 12 is supplied until a discharge port 12b. The depressurized space S2 is the region where the gas inside of the tube unit is sucked. In the deaerating module 10, a liquid is supplied to the fluid flowing space S1 which is the interior space of each of the tubes 11, and the gas is sucked from the depressurized space S2 outside the tubes 11, whereby the liquid supplied to the tube unit 12 is deaerated.

Each of the tubes 11 that constitute the tube unit 12 is a tubular membrane (gas permeable membrane) that allows a gas to pass through but does not allow a liquid to pass through (see FIG. 4). The material, membrane shape, membrane form, and the like of the tube 11 are not limited. Examples of the material of the tube 11 include fluororesins such as polytetrafluoroethylene (PTFE), tetrafluoroethylene-perfluoroalkyl vinyl ether copolymer (PFA), tetrafluoroethylene-hexafluoropropylene copolymer (FEP), tetrafluoroethylene-ethylene copolymer (ethylene copolymer) (ETFE), polychlorotrifluoroethylene (PCTFE), amorphous fluoropolymer (AF), and polyvinylidene fluoride (PVDF), polypropylene (PP), polymethylpentene (PMP), silicone, polyimide, and polyamide. An example of the amorphous fluoropolymer may be Teflon (registered trademark) AF.

In the deaerator 1, two deaerating modules 10 and 20 as illustrated in this drawing are installed, but one deaerating module may be installed, or three or more deaerating modules may be installed.

As illustrated in FIG. 1 and FIG. 2, the vacuum piping 40 is a component for discharging the gas in each depressurized space S2 to the outside. The vacuum piping 40 has a suction pipe portion 41, a discharge pipe portion 42, a detection piping portion 43, and a buffer pipe portion 44.

The suction pipe portion 41 is connected to the deaerating modules 10 and 20 and to the discharge device 50 in order to send the gas in the depressurized spaces S2 in the deaerating modules 10 and 20 to the discharge device 50 by communicating with the depressurized space S2 in each of the deaerating modules 10 and 20. The suction pipe portion 41 has discharge piping portions 45 and 46 that are connected to the discharge nozzle potion 17 in each of the deaerating modules 10 and 20, a discharge collecting portion 47 for assembling the discharge piping portions 45 and 46, and a piping portion 48 that connects the discharge collecting portion 47 to the discharge device 50.

The discharge pipe portion 42 is connected to the discharge device 50 in order to discharge the gas that is sent to the discharge device 50 to the outside of the deaerator 1. The end portion of the discharge pipe portion 42 is attached to the front plate 3 at the location opposite to the discharge device 50 and is opened to the outside of the deaerator 1 at the front plate 3.

The detection piping portion 43 is branched off from the suction pipe portion 41 and is connected to a detector 85 to detect the degree of depressurization in each depressurized space S2 in the deaerating modules 10 and 20. As will be described later, the detector 85 is a barometric pressure sensor that detects the degree of depressurization in the respective depressurized spaces S2 in the deaerating modules 10 and 20, and is installed in the control unit 80.

As will be described later, the buffer pipe portion 44 is branched off from the suction pipe portion 41, and an end portion 44a of the buffer pipe portion 44 at the opposite side from the suction pipe portion 41 is closed by a stopper 90.

At least part of the suction pipe portion 41 (discharge piping portions 45 and 46, the discharge collecting portion 47, and the piping portion 48), the discharge pipe portion 42, the detection piping portion 43, and the buffer pipe portion 44, all these constituting the vacuum piping 40, is formed of, for example, a resin tube. All or almost all (e.g., excluding a joint portion) of the constituent members of the vacuum piping 40 may be formed of a resin tube. In other words, a plurality of the tubes may be coupled using a joint member or the like to constitute the vacuum piping 40. Such a tube is resistant to a solvent used in a liquid chromatography and is formed of a piping, for example, having a rubber hardness of preferably in the range of 70±30 degrees and an oxygen permeability of 6000 cc(STP)cm/cm²/sec/cmHg×10⁻¹⁰ or less. The rubber hardness is preferably in the range of 70±30 degrees. In order to achieve both an appropriate flexibility to prevent loosening or disconnection at a joint portion and an appropriate durability to suppress deformation, crushing, or blocking of the tube, the lower limit is more preferably 50 degrees or more, even more preferably 55 degrees or more, and particularly preferably 60 degrees or more, and the upper limit is more preferably 95 degrees or less, even more preferably 80 degrees or less, and particularly preferably 75 degrees or less. It is noted that the rubber hardness represents Shore A and may be measured, for example, using a durometer (type A) in accordance with JIS K7312 (1996). In view of excellent durability, the oxygen permeability is preferably 6000 cc(STP)cm/cm²/sec/cmHg×10⁻¹⁰ or less, more preferably 3000 cc(STP)cm/cm²/sec/cmHg×10⁻¹⁰ or less, even more preferably 1000 cc(STP)cm/cm²/sec/cmHg×10⁻¹⁰ or less, particularly preferably 500 cc(STP)cm/cm²/sec/cmHg×10⁻¹⁰ or less, and preferably 0.1 cc(STP)cm/cm²/sec/cmHg×10⁻¹⁰ or more, and more preferably 10 cc(STP)cm/cm²/sec/cmHg×10⁻¹⁰ or more. It is noted that the oxygen permeability represents the oxygen transmission rate and may be measured, for example, in accordance with the ASTM D 1434 Standard.

The material of the tube that constitutes the vacuum piping 40 is not limited as long as it has the properties described above. Examples thereof include vinyl chloride and silicone rubber; polyamides (nylon) such as nylon 6, nylon 66, nylon 11, and nylon 12; polyurethanes; polyolefins such as polyethylene such as low-density polyethylene and linear low-density polyethylene, and polypropylene; fluororesins such as FEP, PFA, ETFE, and PTFE; and thermoplastic elastomers such as polyester thermoplastic elastomers, styrene thermoplastic elastomers, and olefin thermoplastic elastomers. One or two or more these resins may be used. Among the materials described above, a resin composition containing a polyolefin and a thermoplastic elastomer is more preferable as the material of the tube that constitutes the vacuum piping 40, and a resin composition containing a polyolefin and a styrene thermoplastic elastomer is even more preferable.

The vacuum piping 40 formed of the resin composition containing a polyolefin and a thermoplastic elastomer described above is excellent not only in the solvent resistance but also in the low gas permeability. The vacuum piping 40 formed of the resin composition containing a polyolefin and a thermoplastic elastomer described above has a proper flexibility, so that loosening or disconnection at a joint portion of the discharge collecting portion 47 during deaerating operation is prevented, and deformation, crushing, or blocking of the tube is suppressed; thus, an excellent durability may also be obtained. Further, the deaerator 1 according to this embodiment includes a plurality of deaerating modules and has many joint configurations such as the joint portion between the vacuum piping 40 and the deaerating modules 10 and 20 and the joint portion between the discharge collecting portion 47 and other portions; but, because of the configuration having the tube with such flexibility and durability, the long-term reliability as the deaerator may also be improved.

The styrene thermoplastic elastomer used for the vacuum piping 40 is a copolymer having at least one styrene block (hard segment) and at least one elastomer block. Vinyl-polydiene, polyisoprene, polybutadiene, polyethylene, polychloroprene, poly(2,3-dimethylbutadiene), or the like may be preferably used as the elastomer block. The elastomer block may be hydrogenated. It is preferable that the elastomer block is hydrogenated, because if so, the solvent resistance and the chemical-resistant performance tend to be higher. Specific examples of the styrene thermoplastic elastomer include styrene-vinylisoprene-styrene triblock copolymer (SIS), styrene-isobutylene diblock copolymer (SIB), styrene-butadiene-styrene triblock copolymer (SBS), styrene-ethylene/butene-styrene triblock copolymer (SEBS), styrene-ethylene/propylene-styrene triblock copolymer (SEPS), styrene-ethylene/ethylene/propylene-styrene triblock copolymer (SEEPS), and styrene-butadiene/butylene-styrene triblock copolymer (SBBS). The styrene thermoplastic elastomers may be used alone or in combination of two or more. Among these, styrene-vinylisoprene-styrene triblock copolymer is preferable because of its superior solvent resistance and chemical-resistant performance. Suitable examples of such styrene-vinylisoprene-styrene triblock copolymer include "FG1901 G Polymer" and "FG1924 G Polymer" available from KRATON CORPORATION and HYBRAR 5127 available from Kuraray Co., Ltd. The hydrogenated vinylisoprene block, HYBRAR 7311, available from Kuraray Co., Ltd. is also suitable.

The lower limit of the range of the amount of styrene block (styrene content) in the styrene thermoplastic elastomer is preferably 1% by mass, more preferably 5% by mass, and even more preferably 10% by mass of the total of styrene block and elastomer block. In this range, higher solvent resistance and chemical-resistant performance tend to be achieved. On the other hand, the upper limit is preferably 30% by mass, and more preferably 20% by mass of the total of styrene block and elastomer block. In this range, solvent resistance and chemical-resistant performance tend to be more excellent.

The lower limit of the range of the amount of styrene thermoplastic elastomer in the resin composition containing a polyolefin and a styrene thermoplastic elastomer is preferably 3% by mass, more preferably 5% by mass, and even more preferably 10% by mass of total of the polyolefin and the styrene thermoplastic elastomer. In this range, higher solvent resistance and chemical-resistant performance tend to be achieved. On the other hand, the upper limit is preferably 30% by mass, more preferably 25% by mass, and even more preferably 20% by mass of total of the polyolefin and the styrene thermoplastic elastomer. In this range, high solvent resistance and chemical-resistant performance tend to be achieved.

In the discharge collecting portion 47, the joint portion that couples the tubes to each other may be formed of a hard plastics (polypropylene) or the like.

The discharge device 50 communicates with the depressurized spaces S2 in the deaerating modules 10 and 20 through the suction pipe portion 41 of the vacuum piping 40 thereby discharging the gas in the depressurized spaces S2 to the outside in accordance with the control instruction from the control unit 80. The discharge device 50 is installed above the bottom plate 2. The discharge device 50 is composed of, among other things, a pump 51 and a fixing plate 52 to which the pump 51 is fixed. The pump 51 is fixed to an upper surface 52a (opposite the bottom plate 2) of the fixing plate 52. Therefore, a lower surface 52b of the fixing plate 52 (the side facing the bottom plate 2) is the lowest surface (the surface of the lowest side of the bottom plate 2) of the discharge device 50. The pump 51 is provided with a motor 53 for discharging the gas in each depressurized space S2 to the outside, a suction port 54 to which the piping portion 48 is connected to inhale the gas from each depressurized space S2, and a discharge port 55 to which the discharge pipe portion 42 is connected to discharge the inhaled gas to the outside of the deaerator 1, so that the gas in each depressurized space S2 is discharged to the outside by rotating the motor 53 in accordance with the control instruction form the control unit 80. Examples of the pump 51 include a diaphragm pump such as a diaphragm type dry vacuum pump. The diaphragm pump is a vacuum pump that drives a diaphragm (diaphragm) up and down by rotating a motor so as to transport the gas from the suction port to the discharge port by a vertical movement of this diaphragm. As for the fixing plate 52, a rectangular metal plate is used, for example.

When the pump 51 is activated to discharge the gas in each depressurized space S2 to the outside, a pulsation of the suction pressure occurs in the suction pipe portion 41 that is connected to the discharge device 50. The pulsation of the suction pressure also occurs in each depressurized space S2 that communicate with the suction pipe portion 41. The buffer pipe portion 44 described above is designed to suppress the pulsation of the suction pressure that occurs in the suction pipe portion 410 and in each depressurized space S2. The buffer pipe portion 44 is branched off from the discharge collecting portion 47 of the suction pipe portion 41 and also communicates with the suction pipe portion 41. With this, the buffer pipe portion 44 increases the volume of the vacuum piping 40 that communicates with the suction pipe portion 41, thereby suppressing the pulsation of the suction pressure generated in the suction pipe portion 410 and in each depressurized space S2. Unlike the detection piping portion 43, the buffer pipe portion 44 is not connected to the detector 85.

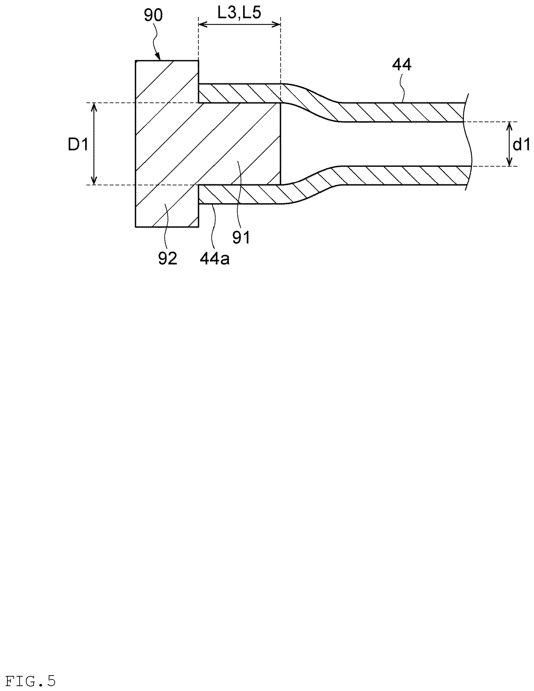

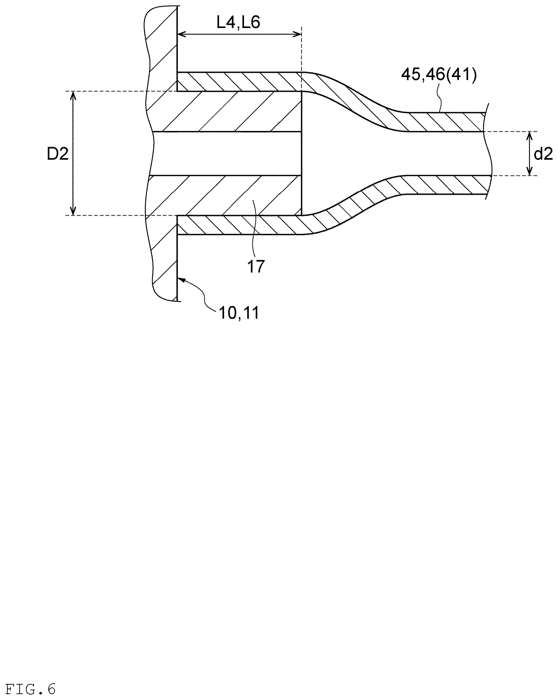

FIG. 5 is an enlarged cross-sectional view of a portion around the connection portion of the buffer pipe portion with the stopper in the deaerating module illustrated in FIG. 1. FIG. 6 is an enlarged cross-sectional view of a portion around the connection portion of the deaerating module with the suction pipe portion in the deaerating module illustrated in FIG. 1. As illustrated in FIG. 5 and FIG. 6, an inner diameter d1 of the buffer pipe portion 44 is not particularly limited. From the viewpoint of easily manufacturing the vacuum piping 40, for example, the inner diameter d1 of the buffer pipe portion 44 may be the same as an inner diameter d2 of the suction pipe portion 41. In other words, the inner diameter d1 of the buffer pipe portion 44 may be the same as the respective inner diameters d2 of the discharge piping portions 45 and 46, of the discharge collecting portion 47, and of the piping portion 48 in the suction pipe portion 41, excluding the connecting portion that interconnects each pipe in the discharge collecting portion 47.

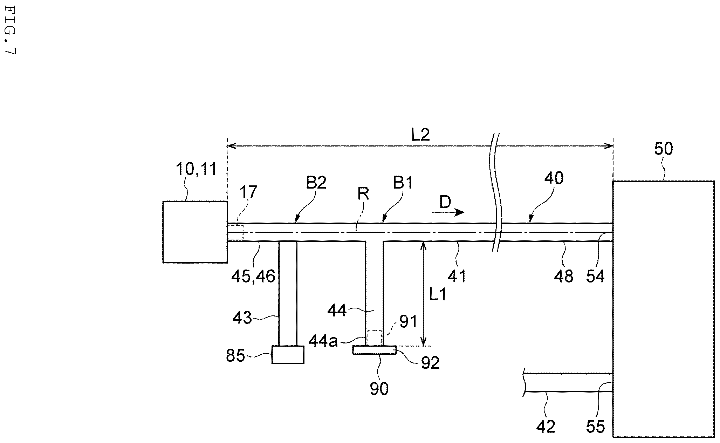

FIG. 7 is a schematic cross-sectional view illustrating the deaerating module, the vacuum piping, and the discharge device in the deaerator illustrated in FIG. 1. As illustrated in FIG. 7, a length L1 of the buffer pipe portion 44 is not limited. For example, from the viewpoint of properly suppressing the pulsation of the suction pressure generated in the suction pipe portion 41 and each depressurized space S2, the length L1 of the buffer pipe portion 44 is preferably, for example, 5% or more of a length L2 of the path R from the deaerating modules 10 and 20 to the discharge device 50 in the suction pipe portion 41, more preferably 7.5% or more of the length L2 of a path R, and even more preferably 10% or more of the length L2 of the path R. The path R is, for example, the shortest path from the deaerating modules 10 and 20 to the discharge device 50 in the suction pipe portion 41. In the case that the deaerating module 10 is located in downstream of the deaerating module 20 in a gas flow direction D from the deaerating modules 10 and 20 to the discharge device 50, the path R is, for example, the path from the deaerating module 10 located in downstream in the flow direction D to the discharge device 50. The length L1 of the buffer pipe portion 44 is 5% of the length L2 of the path R means that the length L1 of the buffer pipe portion 44 is 0.05 times the length L2 of the path R. On the other hand, from the viewpoint of easy handling of the buffer pipe portion 44, the length L1 of the buffer pipe portion 44 is, for example, preferably 30% or less of the length L2 of the path R, more preferably 20% or less of the length L2 of the path R, and even more preferably 15% or less of the length L2 of the path R . From these viewpoints, it is preferable that the length L1 of the buffer pipe portion 44 is, for example, preferably 5% or more and 30% or less of the length L2 of the path R from the deaerating modules 10 and 20 to the discharge device 50 in the suction pipe portion 41, more preferably 7.5% or more and 20% or less of the length L2 of the path R, and even more preferably 10% or more and 15% or less of the length L2 of the path R.

As illustrated in FIG. 5 and FIG. 7, for example, from the viewpoint of properly suppressing the pulsation of the suction pressure generated in the suction pipe portion 41 and each depressurized space S2, the length L1 of the buffer pipe portion 44 is, for example, preferably 1000% or more of the inner diameter d1 of the buffer pipe portion 44, more preferably 1100% or more of the inner diameter d1 of the buffer pipe portion 44, and even more preferably 1200% or more of the inner diameter d1 of the buffer pipe portion 44. The description that the length L1 of the buffer pipe portion 44 is 1000% of the inner diameter d1 of the buffer pipe portion 44 means that the length L1 of the buffer pipe portion 44 is 10 times the inner diameter d1 of the buffer pipe portion 44. On the other hand, from the viewpoint of easy handling of the buffer pipe portion 44, the length L1 of the buffer pipe portion 44 is, for example, preferably 1600% or less of the inner diameter d1 of the buffer pipe portion 44, more preferably 1500% or less of the inner diameter d1 of the buffer pipe portion 44, and even more preferably 1400% or less of the inner diameter d1 of the buffer pipe portion 44. From these viewpoints, the length L1 of the buffer pipe portion 44 is, for example, preferably 1000% or more and 1600% or less of the inner diameter d1 of the buffer pipe portion 44, more preferably 1100% or more and 1500% or less of the inner diameter d1 of the buffer pipe portion 44, and even more preferably 1200% or more and 1400% or less of the inner diameter d1 of the buffer pipe portion 44.

As illustrated in FIG. 1 and FIG. 7, the portion at which the buffer pipe portion 44 is branched off from the suction pipe portion 41 is referred to as a buffer branch portion B1, and the portion at which the detection piping portion 43 is branched off from the suction pipe portion 41 is referred to as a detection branch portion B2. In this case, the buffer branch portion B1 and the detection branch portion B2 may be at any position in the suction pipe portion 41. For example, from the viewpoint of further reducing the pulsation of the suction pressure generated in the depressurized space S2, the buffer branch portion B1 is located preferably in downstream of the deaerating modules 10 and 20 in the gas flow direction D from the deaerating modules 10 and 20 to the discharge device 50. In other words, the buffer branch portion B1 is located preferably in the discharge device 50 side than the deaerating modules 10 and 20 in the path R from the deaerating modules 10 and 20 to the discharge device 50 in the suction pipe portion 41. From the viewpoint of improving the detection accuracy of the detector 85, the detection branch portion B2 is located preferably in upstream of the buffer branch portion B1 in the gas flow direction D from the deaerating modules 10 and 20 to the discharge device 50. In other words, in the path R from the deaerating modules 10 and 20 to the discharge device 50 in the suction pipe portion 41, the detection branch portion B2 is located preferably in the opposite side of the discharge device 50 than the buffer branch portion B1.

As illustrated in FIG. 1, FIG. 5, and FIG. 7, the stopper 90 is removably attached to the end portion 44a of the buffer pipe portion 44 such that it may be disconnected from the end portion 44a of the buffer pipe portion 44 when the suction pipe portion 41 and the depressurized space S2 are pressurized to a high pressure. In other words, the stopper 90 closes the end portion 44a of the buffer pipe portion 44 when it is inserted into the end portion 44a of the buffer pipe portion 44, and opens the end portion 44a of the buffer pipe portion 44 when it is disconnected from the end portion 44a of the buffer pipe portion 44. The stopper 90 has an insertion portion 91 that is press-fit into the buffer pipe portion 44 and a widened diameter portion 92 that has a larger diameter than the insertion portion 91.

The insertion portion 91 is press-fit into the end portion 44a of the buffer pipe portion 44 to close the end portion 44a of the buffer pipe portion 44. The insertion portion 91 may be any shape as long as it may be press-fit into the end portion 44a of the buffer pipe portion 44 to close the end portion 44a of the buffer pipe portion 44. For example, the insertion portion 91 may be cylindrical. The outer circumference of the insertion portion 91 is longer than the inner circumference of the end portion 44a of the buffer pipe portion 44. When the insertion portion 91 is cylindrical, the outer diameter D1 of the insertion portion 91 is larger than the inner diameter of the end portion 44a of the buffer pipe portion 44. The inner diameter of the end portion 44a of the buffer pipe portion 44 is not the inner diameter of the end portion 44a of the buffer pipe portion 44 that has been widened by the press-fitting of the insertion portion 91, but the inner diameter of the end portion 44a of the buffer pipe portion 44 before the insertion portion 91 is press-fit.

The widened diameter portion 92 has a larger diameter than the insertion portion 91, thereby forming a step with the insertion portion 91. The widened diameter portion 92 regulates the press-fit amount (press-fit length) of the insertion portion 91 into the end portion 44a of the buffer pipe portion 44 by having this step contacted to the edge surface of the end portion 44a of the buffer pipe portion 44. The outer diameter of the widened diameter portion 92 is larger than the outer diameter of the end portion 44a of the buffer pipe portion 44, which is widened, for example, by the press-fitting of the insertion portion 91, so that the widened diameter portion 92 may also serves as an assist handle for pulling the insertion portion 91 from the end portion 44a of the buffer pipe portion 44.

As illustrated in FIG. 5 and FIG. 6, the deaerator 1 has the configuration such that when the suction pipe portion 41 and each depressurized space S2 are pressurized to a high pressure, the adhesion force between the insertion portion 91 and the buffer pipe portion 44 is smaller than the adhesion force between the discharge nozzle portion 17 and the suction pipe portion 41 so that the stopper 90 may readily be disconnected from the buffer pipe portion 44 before the discharge nozzle portion 17 is disconnected from the suction pipe portion 41. In the configuration as described above, for example, the outer circumference length of the insertion portion 91 may be configured to be smaller than the outer circumference length of the discharge nozzle portion 17. When the discharge nozzle portion 17 and the insertion portion 91 are formed in a cylindrical shape, the outer diameter D1 of the insertion portion 91 may be configured to be smaller than an outer diameter D2 of the discharge nozzle portion 17. When whole of the insertion portion 91 and whole of the discharge nozzle portion 17 are press-fit into the buffer pipe portion 44 and the suction pipe portion 41, respectively, the length L3 of the insertion portion 91 may be configured to be shorter than the length L4 of the discharge nozzle portion 17. When any portion of the insertion portion 91 and the discharge nozzle portion 17 are press-fit into the buffer pipe portion 44 and the suction pipe portion 41, the press-fit length L5 of the insertion portion 91 into the buffer pipe portion 44 may be configured to be shorter than the press-fit length L6 of the discharge nozzle portion 17 into the suction pipe portion 41.

As illustrated in FIG. 1 and FIG. 2, the discharge device 50 is supported by four vibration-absorbing members 101 on the bottom plate 2 of the housing 5. The four vibration-absorbing members 101 have the same configuration; thus, these will be described collectively as the vibration-absorbing member 101, unless specifically mentioned separately. The vibration-absorbing member 101 is the component that dampens vibration and suppresses transmission of vibration. The vibration-absorbing member 101 is interposed between the bottom plate 2 and the discharge device 50 (fixing plate 52) to support the discharge device 50 on the bottom plate 2. The four vibration-absorbing members 101 are located at the four corners of the fixing plate 52 in the plan view and support the discharge device 50 (fixing plate 52) at the four corners of the fixing plate 52. The discharge device 50 is placed at a predetermined height from the upper surface 2a (the side of the discharge device 50) of the bottom plate 2 by the vibration-absorbing member 101.

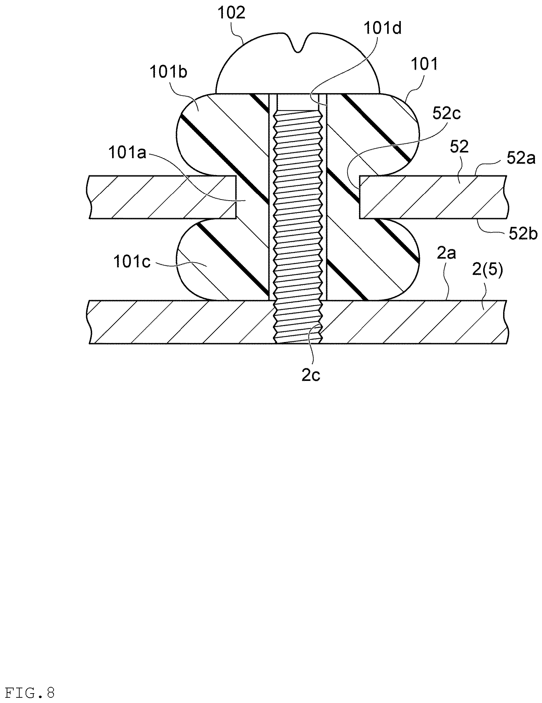

The vibration-absorbing member 101 has a configuration, for example, as illustrated in FIG. 8. FIG. 8 is an enlarged cross-sectional view of a portion around the vibration-absorbing member of the deaerator illustrated in FIG. 1 As illustrated in FIG. 8, the vibration-absorbing member 101 is interposed between the bottom plate 2 and the fixing plate 52 to support the fixing plate 52 on the bottom plate 2. The vibration-absorbing member 101 has: a neck portion 101a inserted into a through hole 52c of the fixing plate 52; an upper widened diameter portion 101b that extends from the neck portion 101a toward the upper surface 52a of the fixing plate 52; a lower widened diameter portion 101c that extends from the neck portion 101a toward the lower surface 52b of the fixing plate 52; and a through hole 101d formed through the neck portion 101a, through the upper widened diameter portion 101b, and through the lower widened diameter portion 101c. The upper widened diameter portion 101b and the lower widened diameter portion 101c are larger in the diameter than the hole diameter of the through hole 52c of the fixing plate 52 so that they do not pass through the through hole 52c of the fixing plate 52. A screw 102 is inserted into the through hole 101d of the vibration-absorbing member 101 from the upper surface 52a side of the fixing plate 52, and is screwed into a screw hole 2c of the bottom plate 2. As a result, the upper widened diameter portion 101b and the lower widened diameter portion 101c sandwich the fixing plate 52 from the upper surface 52a side and from the lower surface 52b side, and the lower widened diameter portion 101c is pressed against the bottom plate 2, so that the discharge device 50 is supported by the bottom plate 2 via the vibration-absorbing member 101. The lower widened diameter portion 101c serves as a spacer between the fixing plate 52 and the bottom plate 2, thereby allowing the fixing plate 52 to be arranged at a predetermined height from the bottom plate 2.

As illustrated in FIG. 1 and FIG. 2, the atmospheric release piping 60 is the member that communicates with the respective depressurized spaces S2 in the deaerating modules 10 and 20 to connect the depressurized spaces S2 to the atmospheric release valve 70. The atmospheric release piping 60 has release piping portions 61 and 62 that are connected to the respective release ports 18a of the deaerating modules 10 and 20, a release collecting portion 64 for collecting the release piping portions 61 and 62, and a piping 65 that connects the release collecting portion 64 to the atmospheric release valve 70. An end portion 66 opposite to the piping 65 of the release collecting portion 64 of the atmospheric release piping 60 is closed. The atmospheric release piping 60 is formed of the same material as the vacuum piping 40, for example, a resin tube. More specifically, at least part of the release piping portions 61 and 62, the release collecting portion 64, and the piping 65, these constituting the atmospheric release piping 60, are formed of, for example, a resin tube as mentioned above. All or almost all (e.g., excluding joint portions) of the constituent members of the atmospheric release piping 60 may be formed of the resin tubes. In other words, a plurality of the resin tubes may be coupled using joint members or the like to constitute the atmospheric release piping 60. The resin tubes as described above are resistant to a solvent that is used in a liquid chromatography and is formed of a piping having a rubber hardness in the range of 70±30 degrees and an oxygen permeability of 6000 cc(STP)cm/cm²/sec/cmHg×10⁻¹⁰ or less. The joint portion of the release collecting portion 64 may be formed of a hard plastic (e.g., polypropylene) or the like, in the same manner as the joint portion of the discharge collecting portion 47.

The atmospheric release valve 70 is a solenoid valve communicating with one end of the atmospheric release piping 60 and is capable of introducing the atmosphere into the respective depressurized spaces S2 in the deaerating modules 10 and 20 at once through the atmospheric release piping 60 in accordance with a control instruction from the control unit 80. When the deaerating process in the deaerating modules 10 and 20 is finished, for example, the atmospheric release valve 70, which is the solenoid valve, opens from the closed state (CLOSE) to the open state (OPEN) within five seconds in accordance with the control instruction from the control unit 80, whereby this opens the depressurized spaces S2 (for example, 1-L volume containers) to an atmosphere within one minute.

The regulating valve 75 is a solenoid valve placed between the deaerating modules 10 and 20 and the discharge device 50 to regulate the degree of depressurization in the depressurized spaces S2. The regulating valve 75 opens the valve while the depressurization process in the depressurized spaces S2 by the discharge device 50 is being conducted, and closes the valve in accordance with the control instruction from the control unit 80 when the degree of depressurization in the depressurized spaces S2 reaches within a predetermined range. At this time, the discharge device 50 may stop its discharge action. On the other hand, when the degree of depressurization in the depressurized spaces S2 becomes outside the predetermined range, the valve is opened in accordance with the control instruction from the control unit 80. Both the atmospheric release valve 70 and the regulating valve 75 are placed at a predetermined height from the bottom plate 2 of the housing 5 by a plurality of legs 71 and a plurality of legs 76.

The control unit 80 controls the activation and deactivation of the pump 51 of the discharge device 50. The control unit 80 has the detector 85 to detect the degree of depressurization in the depressurized spaces S2 and controls the operation of the discharge device 50 and the regulating valve 75 in accordance with the detected degree of depressurization. In this control, the atmosphere is discharged by the discharge device 50 so that the degree of depressurization detected by the detector 85 attains a predetermined value, and when the degree of depressurization in the depressurized spaces S2 falls within the predetermined range, the regulating valve 75 is closed and the operation of the discharge device 50 is stopped. When the degree of depressurization detected by the detector 85 falls outside the predetermined range after the regulating valve 75 is closed, the control unit 80 makes the discharge device 50 to operate again to perform the discharge process.

On the other hand, when the deaerating process by the deaerating modules 10 and 20 is finished, the control unit 80 controls the operation of the discharge device 50 and of the atmospheric release valve 70 in accordance with a stop instruction, for example, from outside. In this control, after the deaerating process is finished, the atmospheric release valve 70 is opened to open the depressurized spaces S2 to an atmosphere at once. After the deaerating process is finished, the control may also be performed such that the atmospheric release valve 70 is opened to open the depressurized spaces S2 to an atmosphere at once while the gas discharge operation by the discharge device 50 continues for a predetermined time (e.g., a few seconds).

In the deaerator 1 according to this embodiment, each depressurized space S2 in the deaerating modules 10 and 20 communicates with the discharge device 50 via the suction pipe portion 41 of the vacuum piping 40, so that, when the discharge device 50 is operated, the pulsation of the suction pressure occurs in the suction pipe portion 41 and in each depressurized space S2 in the deaerating modules 10 and 20. However, because the vacuum piping 40 has, in addition to the suction pipe portion 41, which communicates with each depressurized space S2 and is extended from the deaerating modules 10 and 20 to the discharge device 50, the buffer pipe portion 44, which is branched off from the suction pipe portion 41 and has the end portion 44a closed; thus, the pulsation of the suction pressure spreads into the buffer pipe portion 44, resulting in reduction of the pulsation of the suction pressure generated in the suction pipe portion 41 and in each depressurized space S2. With this, the turbulence in the flow rate and amount of the liquid that flows through each of the tube units 12 of the deaerating modules 10 and 20 may be suppressed. Moreover, because the buffer pipe portion 44 is branched off from the suction pipe portion 41, the buffer pipe portion 44 may be formed without making the suction pipe portion 41 longer. This may suppress the increase in the pressure loss of the gas from each depressurized space S2 to the discharge device 50, thereby suppressing the decrease in the discharge efficiency of the discharge device 50. In addition, the suction pipe portion 41 may be readily handled.

In addition, in this deaerator 1, the buffer branch portion B1 is located in downstream of the deaerating modules 10 and 20 in the gas flow direction D from the deaerating modules 10 and 20 to the discharge device 50, so that before the pulsation of the suction pressure generated in the suction pipe portion 41 spreads to each depressurized space S2, this pulsation may be suppressed owing to the buffer pipe portion 44. This may further reduce the pulsation of the suction pressure generated in each depressurized space S2.

In this deaerator 1, the detector 85 for detecting the degree of depressurization in each depressurized space S2 is connected to the detection piping portion 43 that is branched off from the suction pipe portion 41, so that the degree of depressurization in each depressurized space S2 may be properly detected. In addition, by having the detection piping portion 43 separated from the buffer pipe portion 44, the position, shape, and the like of the buffer pipe portion 44 may be designed without any restriction by the detector 85.

In this deaerator 1, the detection branch portion B2 is located in upstream of the buffer branch portion B1 in the gas flow direction D from the deaerating modules 10 and 20 to the discharge device 50, so that before the pulsation of the suction pressure in the suction pipe 41 spreads over to the detection piping portion 43, the buffer pipe portion 44 may reduce such pulsation. This improves the detection accuracy of the detector 85.

In this deaerator 1, the inner diameter d1 of the buffer pipe portion 44 is the same as the inner diameter d2 of the suction pipe portion 41, making it easy to manufacture the vacuum piping 40.

In this deaerator 1, the length L1 of the buffer pipe portion 44 is 5% or more, 7.5% or more, or 10% or more of the length L2 of the path R from the deaerating modules 10 and 20 to the discharge device 50 in the suction pipe portion 41, so that this allows to properly suppress the pulsation of the suction pressure generated in the suction pipe portion 41. On the other hand, the length L1 of the buffer pipe portion 44 is 30% or less, 20% or less, or 15% or less of the length L2 of the path R from the deaerating modules 10 and 20 to the discharge device 50 in the suction pipe portion 41, so that this allows easy handling of the buffer pipe portion 44.

In this deaerator, the length L1 of the buffer pipe portion 44 is 1000% or more, 1100% or more, or 1200% or more of the inner diameter d1 of the buffer pipe portion 44, so that the pulsation of the suction pressure generated in the suction pipe portion 41 may be properly suppressed. On the other hand, the length L1 of the buffer pipe portion 44 is 1600% or less, 1500% or less, or 1400% or less of the inner diameter d1 of the buffer pipe portion 44, so that this allows easy handling of the buffer pipe portion 44.

The deaerator 1 is also equipped with the stopper 90 that closes the end portion 44a of the buffer pipe portion 44, so that this allows the end portion 44a of the buffer pipe portion 44 to be readily closed. Suppose the suction pipe portion 41 is incorrectly connected to the discharge port 55 side of the discharge device 50 during maintenance or the like, and when the discharge device 50 is activated in this state; then, the suction pipe portion 41 and each depressurized space S2 are pressurized to a high pressure. When the suction pipe portion 41 and each depressurized space S2 are pressurized to a high pressure, among other things, the detector 85 that detects the degree of depressurization in each depressurized space S2 and the suction pipe portion 41 may be damaged, or the suction pipe portion 41 may be disconnected from the deaerating modules 10 and 20. However, because the stopper 90 is removably attached to the end portion 44a of the buffer pipe portion 44, when the suction pipe portion 41 and each depressurized space S2 are pressurized to a high pressure, the stopper 90 is disconnected from the end portion 44a of the buffer pipe portion 44, so that the suction pipe portion 41 and each depressurized space S2 are opened to an atmosphere. Thus, the stopper 90 functions as a safety valve to prevent damage to, among other things, the detector 85 and the suction pipe portion 41, so that the suction pipe portion 41 may be prevented from being disconnected from the deaerating modules 10 and 20. By removing the stopper 90 from the buffer pipe portion 44, an additional deaerating module (not illustrated in the drawings) may be connected to the buffer pipe portion 44, thereby providing excellent expandability.

In this deaerator 1, the stopper 90 has the insertion portion 91 that is press-fit into the buffer pipe portion 44, so that the end portion 44a of the buffer pipe portion 44 may be properly closed.

In this deaerator 1, the adhesion force between the insertion portion 91 and the buffer pipe portion 44 is smaller than the adhesion force between the discharge nozzle portion 17 and the suction pipe portion 41, so that when the suction pipe portion 41 and each depressurized space S2 are pressurized to a high pressure, the insertion portion 91 may be readily disconnected from the buffer pipe portion 44 before the discharge nozzle portion 17 is disconnected from the suction pipe portion 41. This allows the suction pipe portion 41 and each depressurized space S2 to be opened to an atmosphere at an earlier stage, so that the function of the stopper 90 as a safety valve may be further improved.

In this deaerator 1, the outer circumference length of the insertion portion 91 is smaller than the outer circumference length of the discharge nozzle portion 17, so that the adhesion force between the insertion portion 91 and the buffer pipe portion 44 may be made smaller than the adhesion force between the discharge nozzle portion 17 and the suction pipe portion 41. This makes it easier for the insertion portion 91 to be disconnected from the buffer pipe portion 44 before the discharge nozzle portion 17 is disconnected from the suction pipe portion 41 when the suction pipe portion 41 and each depressurized space S2 are pressurized to a high pressure.

In this deaerator 1, the outer diameter D1 of the insertion portion 91 is smaller than the outer diameter D2 of the discharge nozzle portion 17, so that the adhesion force between the insertion portion 91 and the buffer pipe portion 44 may be made smaller than the adhesion force between the discharge nozzle portion 17 and the suction pipe portion 41. This makes it easier for the insertion portion 91 to be disconnected from the buffer pipe portion 44 before the discharge nozzle portion 17 is disconnected from the suction pipe portion 41 when the suction pipe portion 41 and each depressurized space S2 are pressurized to a high pressure.

In this deaerator 1, the length L3 of the insertion portion 91 is shorter than the length L4 of the discharge nozzle portion 17, so that when whole of the insertion portion 91 and whole of the discharge nozzle portion 17 are press-fit into the buffer pipe portion 44 and the suction pipe portion 41, respectively, the adhesion force between the insertion portion 91 and the buffer pipe portion 44 may be made smaller than the adhesion force between the discharge nozzle portion 17 and the suction pipe portion 41. This makes it easier for the insertion portion 91 to be disconnected from the buffer pipe portion 44 before the discharge nozzle portion 17 is disconnected from the suction pipe portion 41 when the suction pipe portion 41 and each depressurized space S2 are pressurized to a high pressure.

In this deaerator 1, the press-fit length L5 of the insertion portion 91 to the buffer pipe portion 44 is shorter than the press-fit length L6 of the discharge nozzle portion 17 to the suction pipe portion 41, so that the adhesion force between the insertion portion 91 and the buffer pipe portion 44 may be made smaller than the adhesion force between the discharge nozzle portion 17 and the suction pipe portion 41. This makes it easier for the insertion portion 91 to be disconnected from the buffer pipe portion 44 before the discharge nozzle portion 17 is disconnected from the suction pipe portion 41 when the suction pipe portion 41 and each depressurized space S2 are pressurized to a high pressure.

In this deaerator 1, at least part of the vacuum piping 40 is formed of a resin composition containing a polyolefin and a styrene thermoplastic elastomer, thereby affording excellent solvent resistance, chemical resistance, and durability. In addition, the gas permeability may be lowered, and disconnection of the vacuum piping 40 may be suppressed. Moreover, the elasticity of the resin composition containing the polyolefin and the styrene thermoplastic elastomer allows the suction pipe portion 41 to expand and contract in response to the pulsation of the suction pressure generated in the suction pipe portion 41. This further reduces the pulsation of the suction pressure generated in the suction pipe portion 41 and in each depressurized space S2.

The embodiment of the present invention has been described above; however, the present invention is not limited to the foregoing embodiment and may be changed or modified as appropriate without departing from the concept of the present invention.

For example, the buffer pipe portion may be closed by other configurations than the stopper. For example, the buffer pipe portion may be closed by a pincer member such as a clip. In this case, the buffer pipe portion is up to the point where it is closed by a clip or other pincer member, and the end portion of the buffer pipe portion is near the portion where it is closed by a clip or other pincer member.

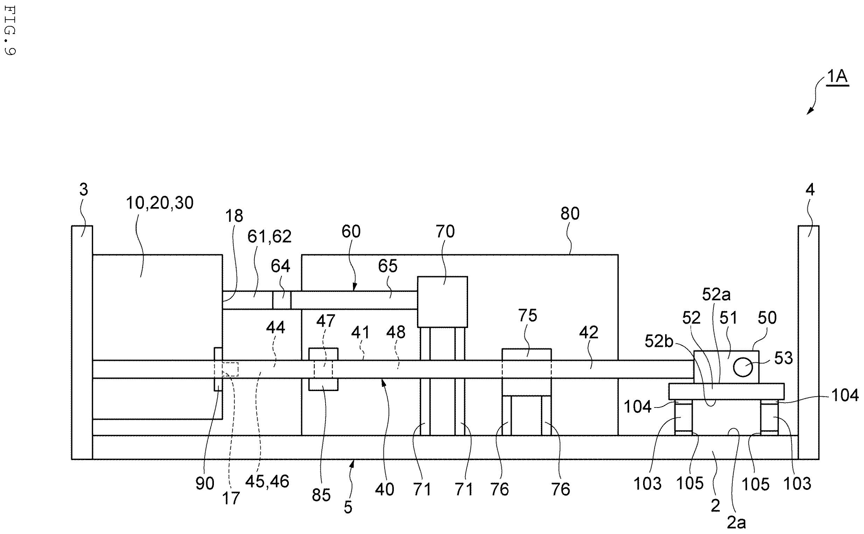

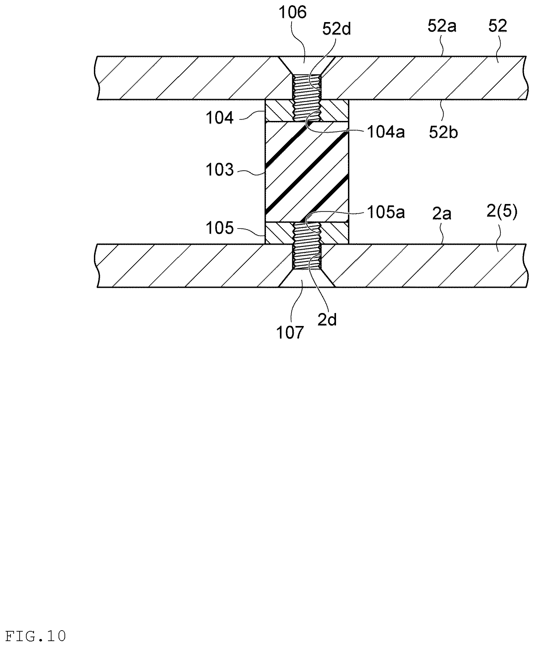

In addition, for example, the vibration-absorbing member may not be directly attached to the housing and the discharge device, but may be attached to the housing and the discharge device via other members. FIG. 9 is a schematic side view of a deaerator of another example. FIG. 10 is an enlarged cross-sectional view of a portion around the vibration-absorbing member of the deaerator illustrated in FIG. 9 In the deaerator 1A illustrated in FIG. 9 and FIG. 10, a vibration-absorbing member 103 is formed in a columnar shape, such as a cylinder column or a square column. An upper plate 104 having a threaded groove 104a is connected to the upper end, which is the tip of one side of the vibration-absorbing member 103, and a lower plate 105 having a threaded groove 105a is connected to the lower end, which is the tip of the other side of the vibration-absorbing member 103. The upper plate 104 is fixed to the fixing plate 52 by a screw 106 inserted into a through hole 52d of the fixing plate 52 and screwed into the threaded groove 104a of the upper plate 104; the bottom plate 105 is fixed to the bottom plate 2 by a screw 107 inserted into a through hole 2d of the bottom plate 2 and screwed into the threaded groove 105a of the lower plate 105. As a result, the vibration-absorbing member 103 is interposed between the bottom plate 2 of the housing 5 and the fixing plate 52 of the discharge device 50, and whereby the discharge device 50 is supported on the bottom plate 2 of the housing 5.

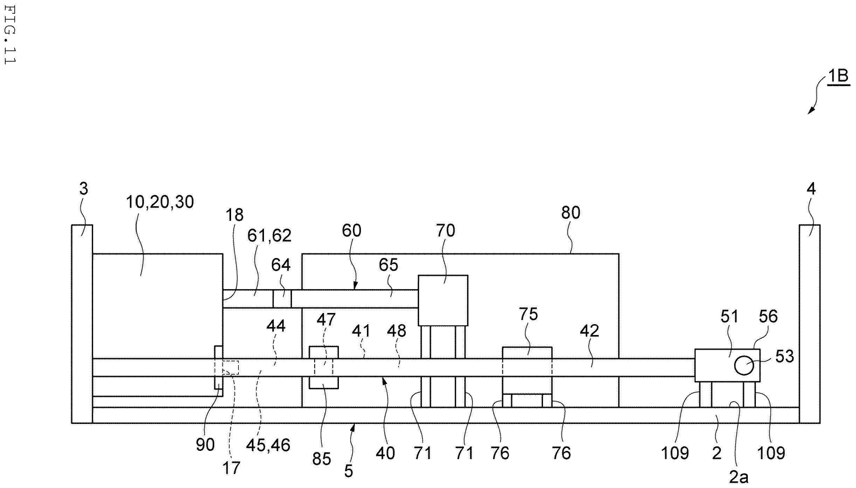

In addition, for example, the vibration-absorbing member may also be attached to the pump of the discharge device, rather than to the fixing plate of the discharge device. FIG. 11 is a schematic side view of a deaerator of another example. In the deaerator 1B illustrated in FIG. 11, a discharge device 56 has a pump 51 similar to the above embodiment, but does not have a configuration corresponding to the fixing plate of the above embodiment. A vibration-absorbing member 109 is attached directly or indirectly to the pump 51 and to the bottom plate 2. The shape of the vibration-absorbing member 109 and the attaching structure of the vibration-absorbing member 109 to the pump 51 and to the bottom plate 2 may be similar to, for example, the shape of the vibration-absorbing member 101 and the attaching structure of the vibration-absorbing member 101 to the fixing plate 52 and to the bottom plate 2 as illustrated in FIG. 8, and also may be similar to the shape of the vibration-absorbing member 103 and the attaching structure of the vibration-absorbing member 103 to the fixing plate 52 and to the bottom plate 2 as illustrated in FIG. 10.

### Industrial Applicability

The present invention may be used as the deaerator for a liquid chromatography, for a gas chromatography, for a biochemical analyzer, for an inkjet filling device, among other things.

### Reference Signs List

1, 1A, 1B deaerator
2 bottom plate
2a upper surface
2c screw hole
2d through hole
3 front plate
4 rear plate
5 housing
10 deaerating module
11 tube
12 tube unit
12a inlet port
12b discharge port
13 housing
13a opening
14 lid
15 connector portion
16 connector portion
17 discharge nozzle portion
17a discharge port
18 release nozzle portion
18a release port
20 deaerating module
40 vacuum piping
41 suction pipe portion
42 discharge pipe portion
43 detection piping portion
44 buffer pipe portion
44a end portion
45, 46 discharge piping portion
47 discharge collecting portion
48 piping portion
50 discharge device
51 pump
52 fixing plate
52a upper surface
52b lower surface
52c through hole
52d through hole
53 motor
54 suction port
55 discharge port
56 discharge device
60 atmospheric release piping
61, 62 release piping portion
64 release collecting portion
65 piping
66 end portion
70 atmospheric release valve
71 leg
75 regulating valve
76 leg
80 control unit
85 detector
90 stopper
91 insertion portion
92 widened diameter portion
101 vibration-absorbing member
101a neck portion
101b upper widened diameter portion
101c lower widened diameter portion
101d through hole
102 screw
103 vibration-absorbing member
104 upper plate
104a threaded groove
105 lower plate
105a threaded groove
106 screw
107 screw
109 vibration-absorbing member
B1 buffer branch portion
B2 detection branch portion
D flow direction
d1 inner diameter
d2 inner diameter
D1 outer diameter
D2 outer diameter
L1 length of the buffer pipe portion
L2 length of the path from the deaerating module to the discharge device in the suction pipe portion
L3 length of the insertion portion
L4 length of the discharge nozzle portion
L5 press-fit length of the insertion portion to the buffer pipe portion
L6 press-fit length of the discharge nozzle portion to the suction pipe portion
R path
S1 fluid flowing space
S2 depressurized space

## Claims

1. A deaerator comprising:
a deaerating module having a tube unit that has gas permeability and partitions between a fluid flowing space and a depressurized space;
a vacuum piping that is connected to the deaerating module to communicate with the depressurized space in the deaerating module; and
a discharge device connected to the vacuum piping and configured to discharge a gas in the depressurized space to outside via the vacuum piping, wherein
the vacuum piping comprises:
a suction pipe portion that communicates with the depressurized space and extends from the deaerating module to the discharge device, and
a buffer pipe portion that is branched off from the suction pipe portion and is closed at an end portion thereof.

2. The deaerator according to claim 1, wherein a buffer branch portion at which the buffer pipe portion is branched off from the suction pipe portion is located in downstream of the deaerating module in a flow direction of the gas from the deaerating module to the discharge device.

3. The deaerator according to claim 1 or 2, further comprising a detector configured to detect a degree of depressurization in the depressurized space, wherein
the vacuum piping further comprises a detection piping portion that is branched off from the suction pipe portion and connected to the detector.

4. The deaerator according to claim 3, wherein a detection branch portion at which the detection piping portion is branched off from the suction pipe portion is located in upstream of a buffer branch portion at which the buffer pipe portion is branched off from the suction pipe portion in a flow direction of the gas from the deaerating module to the discharge device.

5. The deaerator according to any one of claims 1 to 4, wherein an inner diameter of the buffer pipe portion is same as an inner diameter of the suction pipe portion.

6. The deaerator according to any one of claims 1 to 5, wherein a length of the buffer pipe portion is 5% or more and 30% or less of a length of a path from the deaerating module to the discharge device in the suction pipe portion.

7. The deaerator according to any one of claims 1 to 6, wherein a length of the buffer pipe portion is 1000% or more and 1600% or less of an inner diameter of the buffer pipe portion.

8. The deaerator according to any one of claims 1 to 7, further comprising a stopper that is removably attached to the end portion of the buffer pipe portion to close the end portion of the buffer pipe portion.

9. The deaerator according to claim 8, wherein the stopper has an insertion portion that is press-fit into the buffer pipe portion.

10. The deaerator according to claim 9, wherein
the deaerating module has a discharge nozzle portion that is press-fit into the suction pipe portion, and
an adhesion force between the insertion portion and the buffer pipe portion is less than an adhesion force between the discharge nozzle portion and the suction pipe portion.

11. The deaerator according to claim 9 or 10, wherein
the deaerating module has a discharge nozzle portion that is press-fit into the suction pipe portion, and
an outer circumference length of the insertion portion is smaller than an outer circumference length of the discharge nozzle portion.

12. The deaerator according to any one of claims 9 to 11, wherein
the deaerating module has a cylindrical discharge nozzle portion that is press-fit into the suction pipe portion,
the insertion portion is formed cylindrically, and
an outer diameter of the insertion portion is smaller than an outer diameter of the discharge nozzle portion.

13. The deaerator according to any one of claims 9 to 12, wherein
the deaerating module has a discharge nozzle portion that is press-fit into the suction pipe portion, and
a length of the insertion portion is shorter than a length of the discharge nozzle portion.

14. The deaerator according to any one of claims 9 to 13, wherein
the deaerating module has a discharge nozzle portion that is press-fit into the suction pipe portion, and
a press-fit length of the insertion portion to the buffer pipe portion is shorter than a press-fit length of the discharge nozzle portion to the suction pipe portion.

15. The deaerator according to any one of claims 1 to 14, wherein at least part of the vacuum piping is formed of a resin composition containing a polyolefin and a styrene thermoplastic elastomer.
